# EUROPÄISCHE PATENTANMELDUNG

(11) **EP 2 365 268 A2**
(43) Veröffentlichungstag der Anmeldung: **14.09.2011**
(21) Anmeldenummer: 11002032.8
(22) Anmeldetag: 11.03.2011
(51) Int. Cl.: F28D 1/03, F28F 3/02, F28F 13/00, F24J 2/20

(54) **Wärmetauscherplatte**

(30) Priorität: 12.03.2010 DE 102010012017
(71) Anmelder: Mefa Befestigungs- und Montagesysteme GmbH, 74635 Kupferzell (DE)
(72) Erfinder: Schneider, Martin, 74613 Öhringen (DE)
(74) Vertreter: Schuster, Müller & Partner

(57) **Zusammenfassung**

Es wird eine Wärmetauscherplatte (1) bestehend aus zwei zueinander mindestens teilweise beabstandet angeordneten Platten (2), die zumindest an ihren Rändern zur Bildung eines zwischen den Platten (2) befindlichen Hohlraums (8) dicht miteinander verbunden sind, vorgeschlagen, bei der in dem zwischen den Platten (2) befindlichen Hohlraum (8) eine Mittelschicht (6) z.B. aus Metall angeordnet ist, durch die ein Strömungsweg des den Hohlraum (8) durchströmenden Mediums beeinflusst wird, wodurch bei einfacher Bauart ein hoher Wirkungsgrad der erfindungsgemäßen Wärmetauscherplatte (1) erzielt wird.

## Beschreibung

### Stand der Technik

Die Erfindung geht aus von einer Wärmetauscherplatte, nach der Gattung des Anspruchs 1.

Es sind Absorber bekannt, die aus verschweißten bzw. verklebten Kunststoffbahnen bestehen und Strömungskanäle für ein Wärmeträgermedium aufweisen, die durch Einblasen von Luft oder mittels eines flüssigen Mediums ausgeformt werden. Um an den Verbindungsstellen der Kunststoffbahnen eine hinreichende Festigkeit zu gewährleisten, ist es erforderlich, dass die Verbindungsflächen verhältnismäßig breit ausgestaltet sind. Die dadurch erzielte Festigkeit wirkt sich aber nachteilig auf den Wirkungsgrad des Absorbers aus, da dieser unter anderem durch die Fläche bestimmt wird, die mit dem Wärmeträgermedium in unmittelbarem Kontakt steht.

Aus der Patentschrift AT 400 490 B ist ein Absorber für einen Sonnenkollektor bekannt, der aus zwei, einen Hohlraum bildenden Blechen gebildet ist, die an ihren Rändern dicht miteinander verschweißt sind, wobei der zwischen den Blechen befindliche Raum zur Bildung von Strömungskanälen für ein Wärmeträgermedium durch parallel zu einander verlaufende Schweißnähte unterteilt ist und die Strömungskanäle bei der Absorberherstellung durch Einleitung eines Druckmediums aufgeweitet wurden. Zwar ist der Wirkungsgrad des Absorbers, da ca. 90% der Fläche mit dem Wärmeträgermedium in unmittelbarem Kontakt mit den Blechen steht, verbessert, doch ist die Herstellung eines derartigen Absorbers sehr aufwändig.

### Die Erfindung und ihre Vorteile

Die erfindungsgemäße Wärmetauscherplatte, mit dem kennzeichnenden Merkmal des Anspruchs 1, hat demgegenüber den Vorteil, dass im zwischen den Platten befindlichen Hohlraum eine Mittelschicht angeordnet ist, durch die ein Strömungsweg des den Hohlraum durchströmenden Mediums beeinflusst wird. Dadurch wird bei einfacher Bauart ein hoher Wirkungsgrad der erfindungsgemäßen Wärmetauscherplatte erzielt.

Die erfindungsgemäße Wärmetauscherplatte hat ein sehr breites Anwendungsspektrum und kann z.B. als Absorber, Kollektor, Heizkörper oder bei Photovoltaikanlagen als Träger für Wafer verwendet werden. Insbesondere als Träger für Wafer kann die Wärmetauscherplatte bei gleichzeitiger Wärmeaufnahme die Wafer kühlen und somit die Leistungsdaten der Wafer deutlich verbessern.

Zusätzlich findet die erfindungsgemäße Wärmetauscherplatte auch eine optische Akzeptanz auf Dachflächen oder als Fassaden- oder Balkonverkleidung, da die Oberfläche plan ausgeführt werden kann.

Nach einer vorteilhaften Ausgestaltung der erfindungsgemäßen Wärmetauscherplatte sind die Platten an ihren Rändern direkt oder mittels eines Steges indirekt miteinander verbunden. Die direkte Verbindung kann, neben den gängigen Verbindungsmöglichkeiten, wie z.B. Bördeln oder Durchsetzfügen, durch eine stoffschlüssige Verbindung, wie z.B. durch Löten, Hochtemperaturlöten, Schweißen oder Kleben, erfolgen.

Nach einer zusätzlichen vorteilhaften Ausgestaltung der erfindungsgemäßen Wärmetauscherplatte weisen die Platten zueinander einen konstanten Abstand auf.

Nach einer zusätzlichen vorteilhaften Ausgestaltung der erfindungsgemäßen Wärmetauscherplatte sind die Platten eben, wellig oder gekrümmt. Damit ist die erfindungsgemäße Wärmetauscherplatte individuell an die Gegebenheiten am Einsatzort anpassbar.

Nach einer diesbezüglichen vorteilhaften Ausgestaltung der erfindungsgemäßen Wärmetauscherplatte weist die Mittelschicht mindestens eine Öffnung auf.

Nach einer diesbezüglichen vorteilhaften Ausgestaltung der erfindungsgemäßen Wärmetauscherplatte besteht die Mittelschicht aus mindestens einem Wellblech, aus mindestens einem Lochblech, aus mindestens einem Tränenblech, aus mindestens einem Drahtgitter, aus mindestens einem Trapezblech, aus mindestens einem Formblech, aus mindestens einem Strukturblech und/oder aus Stahlwolle oder weist Zylinderstümpfe, Pyramidenstümpfe odgl. auf.

Nach einer zusätzlichen vorteilhaften Ausgestaltung der erfindungsgemäßen Wärmetauscherplatte bewirkt der Aufbau der Mittelschicht eine diffuse Durchströmung des den Hohlraum durchströmenden Mediums und/oder wird der Wärmetauscher vollflächig durchströmt.

Nach einer zusätzlichen vorteilhaften Ausgestaltung der erfindungsgemäßen Wärmetauscherplatte berührt die Mittelschicht zumindest teilweise die einander zugewandten Seiten der Platten oder ist die Mittelschicht mit diesen verbunden.

Nach einer zusätzlichen vorteilhaften Ausgestaltung der erfindungsgemäßen Wärmetauscherplatte berührt die Mittelschicht zumindest teilweise die Platten an ihren Rändern oder ist die Mittelschicht mit diesen verbunden.

Nach einer zusätzlichen vorteilhaften Ausgestaltung der erfindungsgemäßen Wärmetauscherplatte berührt die Mittelschicht zumindest teilweise den Steg oder ist die Mittelschicht mit diesen verbunden.

Nach einer zusätzlichen vorteilhaften Ausgestaltung der erfindungsgemäßen Wärmetauscherplatte weist mindestens eine der Platten mindestens eine Befestigungsvorrichtung zur Befestigung der erfindungsgemäßen Wärmetauscherplatte auf.

Nach einer diesbezüglichen vorteilhaften Ausgestaltung der erfindungsgemäßen Wärmetauscherplatte weist der Steg mindestens eine Befestigungsvorrichtung zur Befestigung der erfindungsgemäßen Wärmetauscherplatte auf.

Nach einer zusätzlichen vorteilhaften Ausgestaltung der erfindungsgemäßen Wärmetauscherplatte weist die Wärmetauscherplatte mindestens eine Befestigungsvorrichtung auf, die durch beide zueinander mindestens teilweise beabstandet angeordneten Platten hindurchgeht. Bevorzugt kann die Befestigungsvorrichtung eine durch beide Platten hindurchgehende Stange sein.

Nach einer diesbezüglichen vorteilhaften Ausgestaltung der erfindungsgemäßen Wärmetauscherplatte weist mindestens eine der Platten an ihrer dem Hohlraum abgewandten Seite eine Vertiefung zur Aufnahme der Befestigungsvorrichtung auf. In dieser Vertiefung kann beispielsweise ein Schraubenkopf der Befestigungsvorrichtung aufgenommen werden.

Nach einer zusätzlichen vorteilhaften Ausgestaltung der erfindungsgemäßen Wärmetauscherplatte weist die Wärmetauscherplatte mindestens eine Befestigungsvorrichtung auf, die durch zwei einander gegenüberliegende Stege hindurchgeht. Bevorzugt kann die Befestigungsvorrichtung eine durch die Stege hindurchgehende Stange sein.

Nach einer diesbezüglichen vorteilhaften Ausgestaltung der erfindungsgemäßen Wärmetauscherplatte weist mindestens einer der Stege an einer dem Hohlraum abgewandten Seite eine Vertiefung zur Aufnahme der Befestigungsvorrichtung auf. In dieser Vertiefung kann beispielsweise ein als Schraubenkopf ausgebildetes Ende der Stange (Befestigungsvorrichtung) aufgenommen werden.

Nach einer zusätzlichen vorteilhaften Ausgestaltung der erfindungsgemäßen Wärmetauscherplatte sind der Zu- und/oder der Ablauf an einer der Platten angeordnet.

Nach einer zusätzlichen vorteilhaften Ausgestaltung der erfindungsgemäßen Wärmetauscherplatte sind der Zu- und/oder der Ablauf an dem Steg angeordnet.

Nach einer zusätzlichen vorteilhaften Ausgestaltung der erfindungsgemäßen Wärmetauscherplatte sind die Platten aus Metall oder Kunststoff und/oder ist die Mittelschicht aus Metall oder Kunststoff.

Nach einer zusätzlichen vorteilhaften Ausgestaltung der erfindungsgemäßen Wärmetauscherplatte ist im zwischen den Platten befindlichen Hohlraum mindestens ein Leitelement angeordnet, durch das ein Strömungsweg des den Hohlraum durchströmenden Mediums beeinflusst wird.

Nach einer zusätzlichen vorteilhaften Ausgestaltung der erfindungsgemäßen Wärmetauscherplatte ist mindestens eine der Platten an ihrer dem Hohlraum zugewandten Seite eben ausgestaltet.

Weitere Vorteile und vorteilhafte Ausgestaltungen der Erfindung sind der nachfolgenden Beschreibung, der Zeichnung und den Ansprüchen entnehmbar.

### Zeichnung

Ausführungsbeispiele des Gegenstandes der Erfindung sind in der Zeichnung dargestellt und werden im Folgenden näher erläutert. Es zeigen:
- Fig. 1: eine perspektivische Ansicht einer erfindungsgemäßen Wärmetauscherplatte,
- Fig. 2: eine Detaildarstellung einer erfindungsgemäßen Wärmetauscherplatte,
- Fig.3: eine Darstellung einer Mittelschicht in Form eines Drahtgitters einer erfindungsgemäßen Wärmetauscherplatte,
- Fig. 4: eine Schnittdarstellung einer erfindungsgemäßen Wärmetauscherplatte,
- Fig. 5: eine perspektivische Darstellung einer Mittelschicht in Form eines Wellbleches,
- Fig. 6: eine perspektivische Detaildarstellung der Mittelschicht in Form eines Wellbleches gemäß Fig. 5,
- Fig. 7: eine erfindungsgemäße und mit Leitelementen ausgestattete Wärmetauscherplatte,
- Fig. 8: eine erfindungsgemäße und mit Leitelementen ausgestattete Wärmetauscherplatte,
- Fig. 9: eine erfindungsgemäße und mit Leitelementen ausgestattete Wäxmetauscherplatte,
- Fig. 10: eine Explosionszeichnung einer erfindungsgemäßen Wärmetauscherplatte und
- Fig. 11: eine Darstellung einer Mittelschicht, die durch Lochbleche gebildet wird.

### Beschreibung der Ausführungsbeispiele

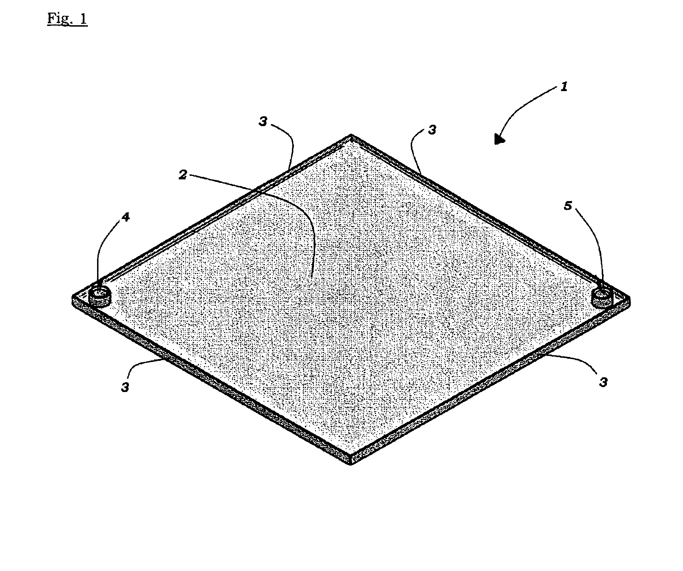

Fig. 1 zeigt eine perspektivische Ansicht einer erfindungsgemäßen Wärmetauscherplatte 1. Diese besteht aus zwei zueinander beabstandet angeordneten Platten 2 z.B. aus Metall, von denen in Fig. 1 nur eine Platte 2 sichtbar ist. Die Platten 2 sind an ihren Rändern mittels Stegen 3 dicht miteinander verbunden, so dass zwischen den Platten 2 ein Hohlraum gebildet wird. An einer der Platten 2 ist ein Zulauf 4 für ein den Hohlraum durchströmendes Medium und Ablauf 5 für das den Hohlraum durchströmende Medium angeordnet.

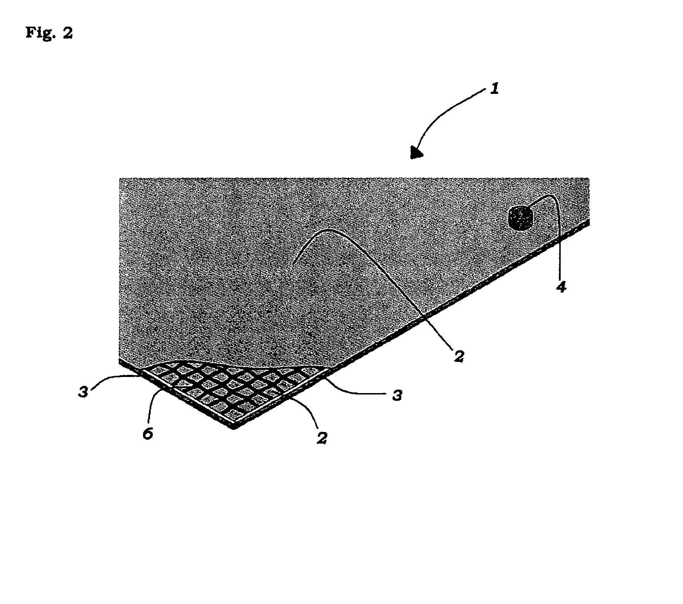

Fig. 2 zeigt eine Detaildarstellung einer erfindungsgemäßen Wärmetauscherplatte 1. Zwischen den beiden durch die Stege 3 beabstandet zueinander angeordneten Platten 2 ist eine Mittelschicht 6 z.B. aus Metall in Form eines Drahtgitters angeordnet. Die Mittelschicht 6 bewirkt eine diffuse Durchströmung des durch den Zulauf 4 in den Hohlraum zugeführten und diesen durchströmenden Mediums.

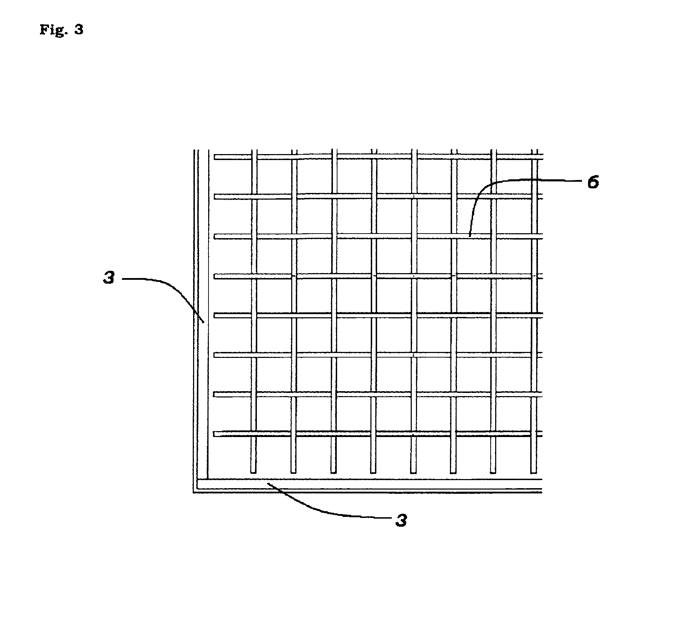

Fig. 3 zeigt eine Darstellung einer Mittelschicht 6 in Form eines Drahtgitters einer erfindungsgemäßen Wärmetauscherplatte 1.

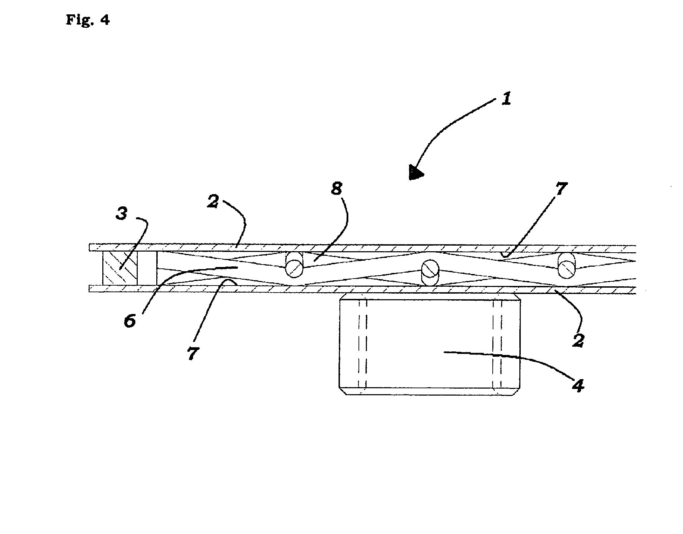

Fig. 4 zeigt eine Schnittdarstellung einer erfindungsgemäßen Wärmetauscherplatte 1. Die Mittelschicht 6 ist als Drahtgitter dargestellt. Das Drahtgitter ist geflochten und berührt zumindest stellenweise die einander zugewandten Seiten 7 der Platten 2. Dadurch wird ein hoher Wirkungsgrad der erfindungsgemäßen Wärmetauscherplatte 1 erreicht, da das den Hohlraum 8 durchströmende Medium mit einer großen Fläche der einander zugewandten Seiten 7 der Platten 2 in unmittelbarem Kontakt steht.

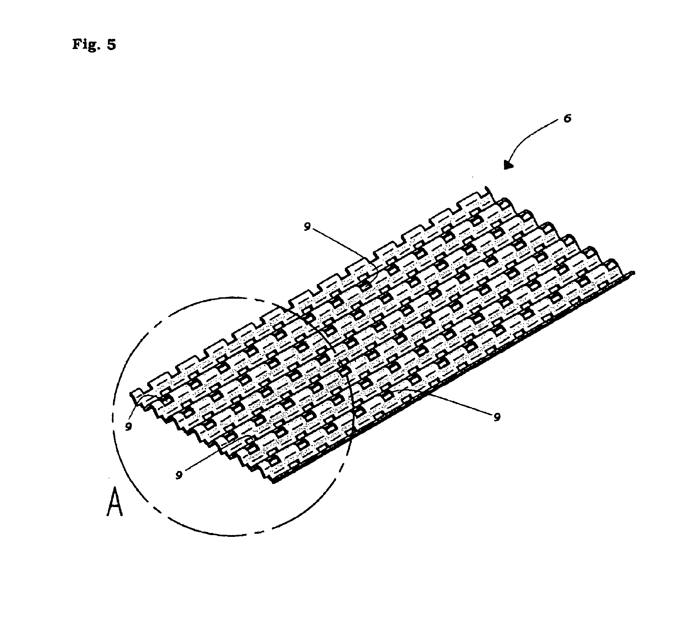

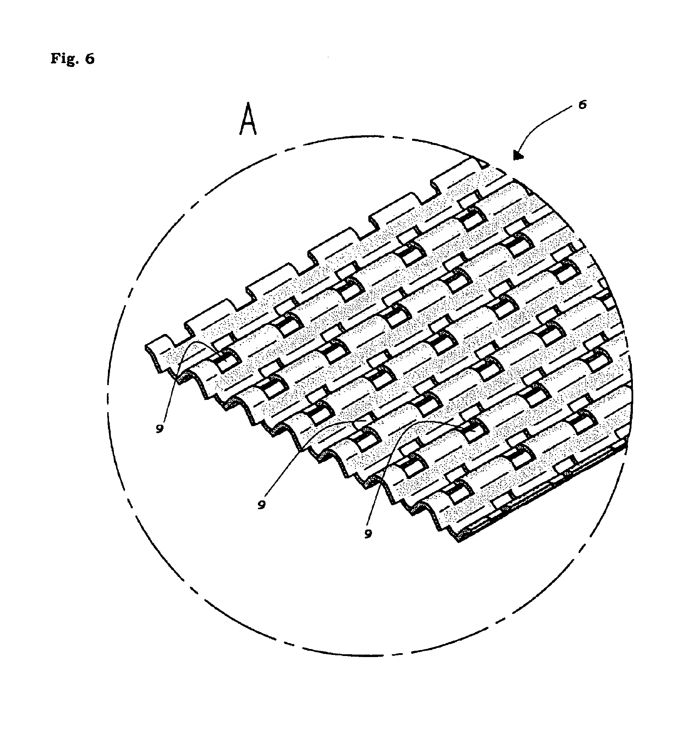

Fig. 5 und deren in Fig. 6 dargestellten Detailansicht A zeigen eine perspektivische Darstellung einer Mittelschicht 6 in Form eines Wellbleches. Damit das den Hohlraum durchströmende Medium in unmittelbaren Kontakt mit den einander zugewandten Seiten der Platten kommt, weist das Wellblech Öffnungen 9 auf.

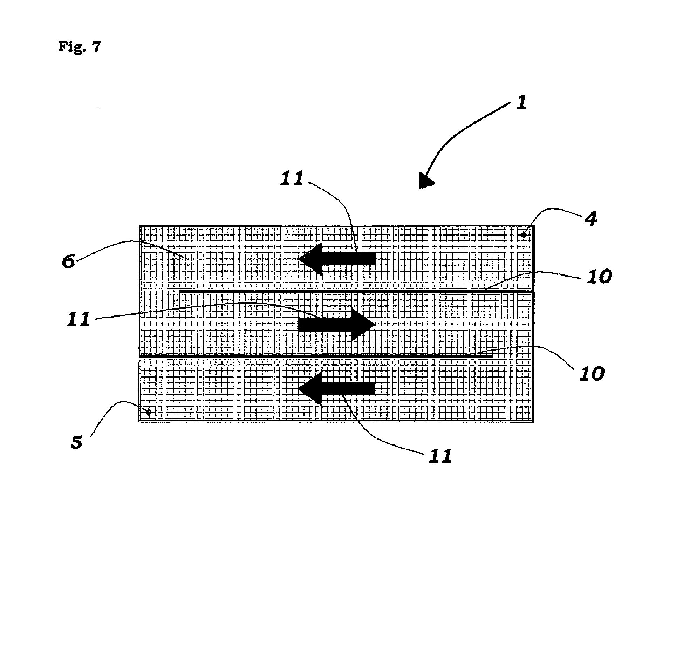

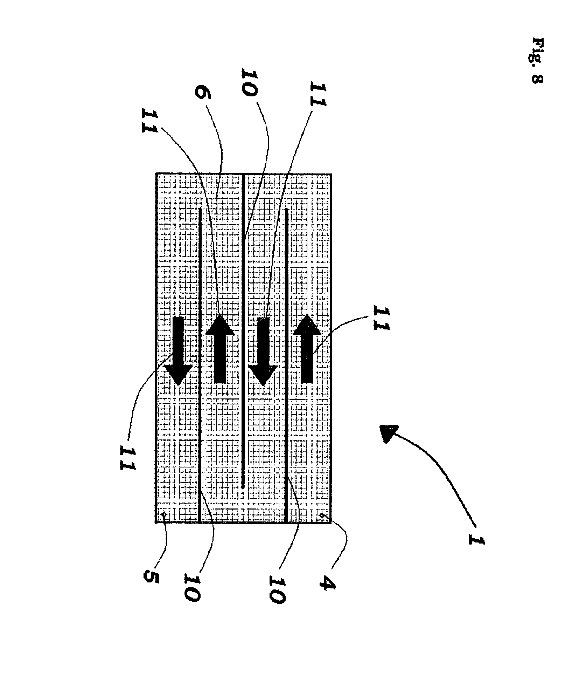

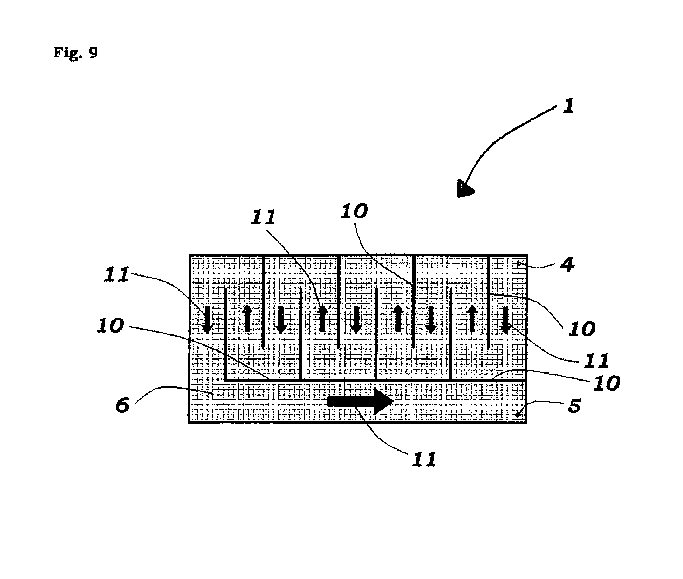

In den Fig. 7 bis 9 sind erfindungsgemäße Wärmetauscherplatten 1 dargestellt, die mit Leitelementen 10 ausgestattet sind. Die Leitelementen 10, die den Strömungsweg 11 des den Hohlraum durchströmenden Mediums vom Zulauf 4 bis zum Ablauf 5 beeinflussen, sind einfache Mittel und völlig frei gestaltbar, so dass mit den Leitelementen 10 der Wärmefluss beeinträchtigt werden kann. Zwischen den Leitelementen 10 ist die Mittelschicht 6 angeordnet. Die Leitelemente 10 sind an den Platten und/oder an dem Steg befestigt.

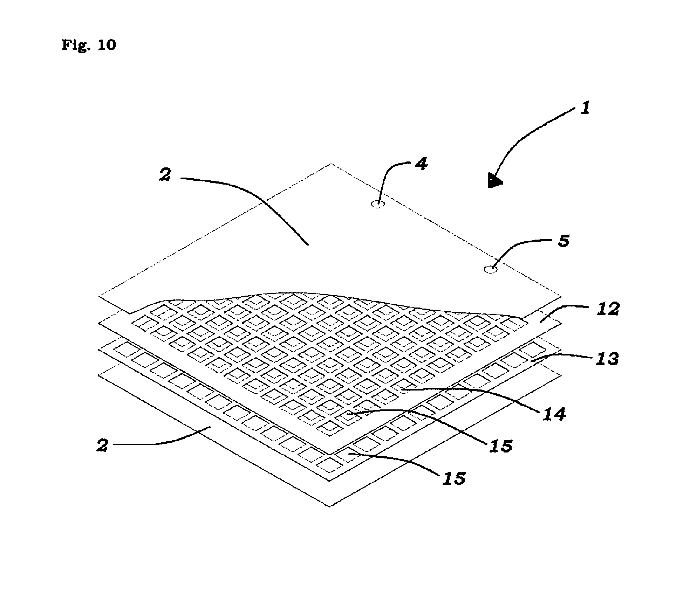

Fig. 10 zeigt eine Explosionszeichnung einer erfindungsgemäßen Wärmetauscherplatte 1, die ebenfalls einen nicht dargestellten Steg aufweisen kann. Die Mittelschicht wird aus den Lochblechen 12 und 13 gebildet, wobei das Lochblech 12 Öffnungen 14 und das Lochblech 13 Öffnungen 15 aufweist. Dabei sind die Öffnungen 14 zu den Öffnungen 15 versetzt angeordnet.

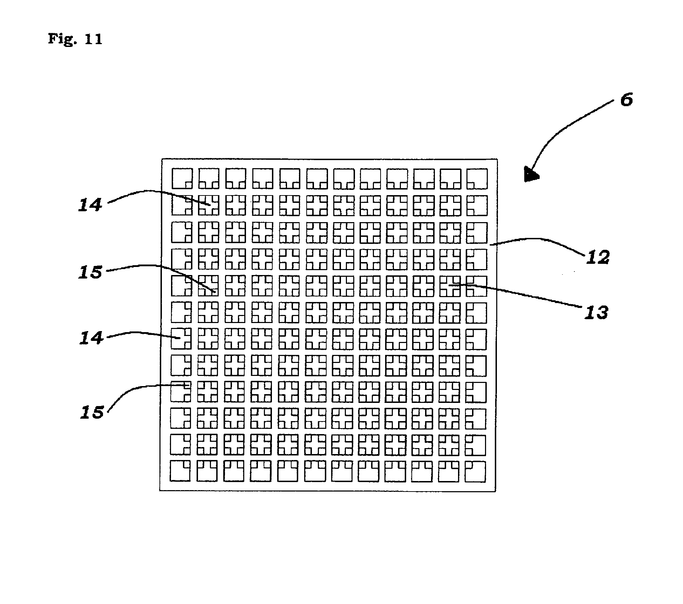

Fig. 11 zeigt eine Darstellung einer Mittelschicht, die durch die Lochbleche 12 und 13 gebildet wird. Dabei wird die versetzte Anordnung der Öffnungen 14 und 15 deutlich. Denkbar wäre auch, dass der erfindungsgemäße Wärmetauscher ein Tränenblech und ein Deckblech aufweist.

Alle hier dargestellten Merkmale können sowohl einzeln als auch in beliebiger Kombination miteinander erfindungswesentlich sein.

### Bezugszahlenliste

- 1: Wärmetauscherplatte
- 2: Platte
- 3: Steg
- 4: Zulauf
- 5: Ablauf
- 6: Mittelschicht
- 7: Zugewandte Seite
- 8: Hohlraum
- 9: Öffnung
- 10: Leitelement
- 11: Strömungsweg
- 12: Lochblech
- 13: Lochblech
- 14: Öffnung
- 15: Öffnung

## Patentansprüche

1. Wärmetauscherplatte (1),
- mit zwei zueinander mindestens teilweise beabstandet angeordneten Platten (2), die zumindest an ihren Rändern zur Bildung eines zwischen den Platten (2) befindlichen Hohlraums (8) dicht miteinander verbunden sind,
- mit mindestens einem Zulauf (4) für ein den Hohlraum (8) durchströmendes Medium und
- mit mindestens einem Ablauf (5) für das den Hohlraum (8) durchströmende Medium,
**dadurch gekennzeichnet,**
**dass** im zwischen den Platten (2) befindlichen Hohlraum (8) eine Mittelschicht (6) angeordnet ist, durch die ein Strömungsweg des den Hohlraum (8) durchströmenden Mediums beeinflusst wird.

2. Wärmetauscherplatte (1), nach Anspruch 1,
**dadurch gekennzeichnet,**
**dass** die Platten (2) an ihren Rändern direkt oder mittels eines Steges (3) indirekt miteinander verbunden sind.

3. Wärmetauscherplatte (1), nach Anspruch 1 oder Anspruch 2,
**dadurch gekennzeichnet,**
**dass** die Platten (2) zueinander einen konstanten Abstand auf weisen.

4. Wärmetauscherplatte (1), nach einem der vorhergehenden Ansprüche,
**dadurch gekennzeichnet,**
**dass** die Platten (2) eben, gekrümmt oder wellig sind.

5. Wärmetauscherplatte (1), nach einem der vorhergehenden Ansprüche,
**dadurch gekennzeichnet,**
**dass** die Mittelschicht (6) mindestens eine Öffnung (9, 14, 15) aufweist.

6. Wärmetauscherplatte (1), nach einem der vorhergehenden Ansprüche,
**dadurch gekennzeichnet,**
**dass** die Mittelschicht (6) aus mindestens einem Wellblech, aus mindestens einem Lochblech, aus mindestens einem Tränenblech, aus mindestens einem Drahtgitter, aus mindestens einem Trapezblech, aus mindestens einem Formblech, aus mindestens einem Strukturblech und/oder aus Stahlwolle besteht oder Zylinderstümpfe, Pyramidenstümpfe odgl. aufweist.

7. Wärmetauscherplatte (1), nach einem der vorhergehenden Ansprüche,
**dadurch gekennzeichnet,**
**dass** der Aufbau der Mittelschicht (6) eine diffuse Durchströmung des den Hohlraum (8) durchströmenden Mediums bewirkt und/oder der Wärmetauscher vollflächig durchströmt wird.

8. Wärmetauscherplatte (1), nach einem der vorhergehenden Ansprüche,
**dadurch gekennzeichnet,**
**dass** die Mittelschicht (6) zumindest teilweise die einander zugewandten Seiten (7) der Platten (2) berührt oder mit diesen verbunden ist.

9. Wärmetauscherplatte (1), nach einem der vorhergehenden Ansprüche,
**dadurch gekennzeichnet,**
**dass** die Mittelschicht (6) zumindest teilweise die Platten (2) an ihren Rändern berührt oder mit diesen verbunden ist.

10. Wärmetauscherplatte (1), nach einem der Ansprüche 2 bis 8,
**dadurch gekennzeichnet,**
**dass** die Mittelschicht (6) zumindest teilweise den Steg (3) berührt oder mit diesen verbunden ist.

11. Wärmetauscherplatte (1), nach einem der vorhergehenden Ansprüche,
**dadurch gekennzeichnet,**
**dass** mindestens eine der Platten (2) mindestens eine Befestigungsvorrichtung aufweist.

12. Wärmetauscherplatte (1), nach einem der Ansprüche 2 bis 11,
**dadurch gekennzeichnet,**
**dass** der Steg (3) mindestens eine Befestigungsvorrichtung aufweist.

13. Wärmetauscherplatte (1), nach einem der vorhergehenden Ansprüche,
**dadurch gekennzeichnet,**
**dass** die Wärmetauscherplatte (1) mindestens eine Befestigungsvorrichtung aufweist, die durch beide zueinander mindestens teilweise beabstandet angeordneten Platten (2) hindurchgeht.

14. Wärmetauscherplatte (1), nach Anspruch 13,
**dadurch gekennzeichnet,**
**dass** mindestens eine der Platten (2) an ihrer dem Hohlraum abgewandten Seite eine Vertiefung zur Aufnahme der Befestigungsvorrichtung aufweist.

15. Wärmetauscherplatte (1), nach einem der Ansprüche 2 bis 14,
**dadurch gekennzeichnet,**
**dass** die Wärmetauscherplatte (1) mindestens eine Befestigungsvorrichtung aufweist, die durch zwei einander gegenüberliegende Stege (3) hindurchgeht.

16. Wärmetauscherplatte (1), nach Anspruch 15,
**dadurch gekennzeichnet,**
**dass** mindestens einer der Stege (3) an einer dem Hohlraum abgewandten Seite eine Vertiefung zur Aufnahme der Befestigungsvorrichtung aufweist.

17. Wärmetauscherplatte (1), nach einem der vorhergehenden Ansprüche,
**dadurch gekennzeichnet,**
**dass** der Zu- (4) und/oder der Ablauf (5) an einer der Platten (2) angeordnet sind.

18. Wärmetauscherplatte (1), nach einem der Ansprüche 2 bis 13,
**dadurch gekennzeichnet,**
**dass** der Zu- (4) und/oder der Ablauf (5) an dem Steg (3) angeordnet sind.

19. Wärmetauscherplatte (1), nach einem der vorhergehenden Ansprüche,
**dadurch gekennzeichnet,**
**dass** die Platten (2) aus Metall oder Kunststoff sind und/oder die Mittelschicht (6) aus Metall oder Kunststoff ist.

20. Wärmetauscherplatte (1), nach einem der vorhergehenden Ansprüche,
**dadurch gekennzeichnet,**
**dass** im zwischen den Platten (2) befindlichen Hohlraum (8) mindestens ein Leitelement (10) angeordnet ist, durch das ein Strömungsweg des den Hohlraum (8) durchströmenden Mediums beeinflusst wird.

21. Wärmetauscherplatte (1), nach einem der vorhergehenden Ansprüche,
**dadurch gekennzeichnet,**
**dass** mindestens eine der Platten (2) an ihrer dem Hohlraum (8) zugewandten Seite eben ausgestaltet ist.
